# EUROPEAN PATENT SPECIFICATION

(11) **EP 2 219 406 B1**
(45) Date of publication and mention of the grant of the patent: **06.07.2011**
(21) Application number: 09152628.5
(22) Date of filing: 11.02.2009
(51) Int. Cl.: H04W 48/20

(54) **Base station selection for a wireless communication system**
Basisstationsauswahl für ein drahtloses Kommunikationssystem
Sélection de station de base pour un système de communication sans fil

(43) Date of publication of application: 18.08.2010
(73) Proprietor: Motorola Mobility, Inc., Libertyville, IL 60048 (US)
(72) Inventor: Escudier, Eric, 31470, Haute-Garonne (FR); Marco, Olivier, 31400, TOULOUSE (FR); Ulmer, Lionel, 31000, TOULOUSE (FR)
(74) Representative: Jepsen, René Pihl

(56) References cited:
- WO-A-02/37889
- WO-A-99/12373
- US-A1- 2004 033 804
- US-A1- 2005 079 870
- US-A1- 2006 160 541

## Description

### Field of the invention

The invention relates to base station selection by a terminal device in a wireless communication system and in particular, but not exclusively, to base station selection in a Global System for Mobile communication (GSM) cellular communication system.

### Background of the Invention

In many cellular communication systems, upon being switched on mobile stations will search for and identify suitable serving base stations. Such detection and selection of a serving base station (also called serving cell) is typically based on measuring and assessing a received signal strength from the base stations.

Patent Cooperation Treaty Patent Publication WO99/12373A discloses a method of enabling a radio station to select a channel from among a group of channels in a radio communication network. Patent Cooperation Treaty Patent Publication WO 02/37889A discloses a channel selection method for a mobile terminal in a time division multiple access system.

In the Global System for Mobile communication (GSM) system, individual mobile stations scan a GSM frequency band to detect potential serving base stations. Specifically, the GSM Technical Specification TS 43.022 defined by the 3^{rd} Generation Partnership Project (3GPP) defines how mobile stations must in certain situations scan for suitable base stations and must check the possible base stations in the order of decreasing received signal strength. The mobile station then selects the first compatible base station as a serving base station and it proceeds to camp on this selected base station.

Such cell selection may be performed by a mobile station when it is first switched on. Thus, the mobile station may proceed to first measure the received signal level for all GSM channels (each being a narrowband channel with a bandwidth of 200 kHz) without trying to decode the signals. The individual channels are ordered according to the received signal level and then the mobile station attempts to decode a valid GSM signal from each channel in order of decreasing received signal level. When the first successful decoding occurs, the corresponding base station is selected as the serving base station.

Although this approach works well in many scenarios, it also has some associated disadvantages. Under certain circumstances, the approach may result in a relatively slow serving cell selection process that may result in a longer delay before the mobile station is ready for use and thus may degrade the user experience. Furthermore, the power consumption of the mobile station may be increased because the power drain during the initial scanning process is substantially higher than when the mobile station is camped on a selected cell in idle mode.

For example, a high received signal level may often be due to the presence of interference rather than the presence of a suitable base station. In particular, for scenarios with strong wideband interference, the received signal level in a large number of channels may be higher than the received signal level from the strongest GSM base station. In this case the mobile station will be required to attempt decoding of a large number of channels dominated by the wideband interference thereby potentially resulting in very substantial delay and increased power consumption.

Also, in some scenarios, the approach may result in a suboptimal base station selection. In particular, in some scenarios the cumulative signal level from a relatively weak GSM base station and a high interference may be greater than the cumulative signal level from a strong GSM base station in a channel with low interference. However, if the weak GSM base station signal can still be decoded, the conventional approach will result in the weak base station being selected instead of the strong base station thereby resulting in degraded performance for the mobile station and the communication system as a whole.

Hence, an improved base station selection would be advantageous and in particular a system allowing increased flexibility, reduced delay, reduced power consumption, improved base station selection, and/or improved performance would be advantageous.

### Brief Description of the Drawings

Embodiments of the invention will be described, by way of example only, with reference to the drawings, in which
FIG. 1 is an illustration of a cellular communication system in accordance with some embodiments of the invention;
FIG. 2 is a first example of an illustration of a terminal device in accordance with some embodiments of the invention;
FIG. 3 is an illustration of a method of operation for a terminal device in accordance with some embodiments of the invention;
FIG. 4 illustrates a first example of a wideband interference scenario;
FIG. 5 illustrates a second example of a wideband interference scenario; and
FIG. 6 is a second example of an illustration of a terminal device in accordance with some embodiments of the invention.

### Detailed Description of Some Embodiments of the Invention

In the described embodiments, a terminal device first determines a received power level for each of a plurality of frequency channels. It then proceeds to consolidate some (or possibly all, in some scenarios) consecutive channels of the plurality of frequency channels into a channel group where the channels of the group all meet a received signal level criterion. For example, the received signal level criterion may require that more than a given number of consecutive channels in a group have a received power level which is higher than a threshold, which may be preset or dynamically determined. The terminal device may then optionally prioritize the channels in order of their received power level. The terminal device then proceeds to iteratively evaluate the channels to determine whether a compatible base station can be detected. The iteration includes selecting a first air interface channel of the plurality of air interface channels. The first air interface channel may specifically be the highest prioritized channel within the group. The terminal device then attempts to decode any signal transmitted in the first channel.

If the decoding of the signal is successful, the terminal device selects the base station of the channel as a serving base station and the iteration terminates.

Otherwise, the terminal device evaluates whether the number of failed decoding attempts for air interface channels of the first group of channels (to which it belongs) exceeds a failed attempt threshold (which specifically may be zero). If so, the terminal device proceeds to bias selection away from all air interface channels that belong to the first group of channels (i.e. that belong to the group of channels that includes the first air interface channel). The biasing may be performed by de-prioritizing other channels of the first group so that these will not be considered until all other single channels or groups have been considered at least once. Alternatively, the biasing may simply discard all channels of the first group from further selection for decoding.

Specifically, in some of the examples, a terminal device consolidates narrowband air interface channels into a channel group if they are consecutive and meet a received power level criterion. If strong wideband interference is present, this will typically result in grouping together of a number of narrowband air interface channels affected by this high wideband interference. The terminal device then arranges the air interface channels in order of received power level and proceeds to decode sequentionally the signals from a base station in the channels. The decoding is attempted in the order of decreasing received power level. However, the order (or indeed which channels are considered) can also take into account the grouping of the channels. Specifically, if a number of channels belonging to the same group have failed to be decoded, the terminal device skips the rest of the channels in this group and proceeds to attempt to decode the next air interface channel which is not part of that channel group.

The approach takes assumes that if a high signal level is detected in a frequency range corresponding to a relatively large number of consecutive narrowband channels, but a number of attempts to decode a compatible signal has failed, then the high signal level is probably due to the presence of wideband interference. In such a scenario, improved cell selection performance can often be achieved by ignoring channels in this frequency range or reducing priority for the remaining channels in the group during the cell selection procedure.

Thus, in the presence of wideband interference extended over a potentially large number of adjacent narrowband channels, only a small number (e.g., only a single) decoding attempt is made before all channels in the group are skipped or otherwise deprioritized. This may provide a substantially faster and less power-consuming cell selection process in situations where the received signal level for the more optimal compatible base station is lower than the signal level measured in channels being affected by the wideband interference. Also, the approach may reduce the risk of a weaker compatible base station being selected in preference to a stronger compatible base station due to a higher level of wideband interference being present in the channel of the weaker base station. Thus, the approach may provide improved performance in a narrowband communication system in the presence of wideband interference.

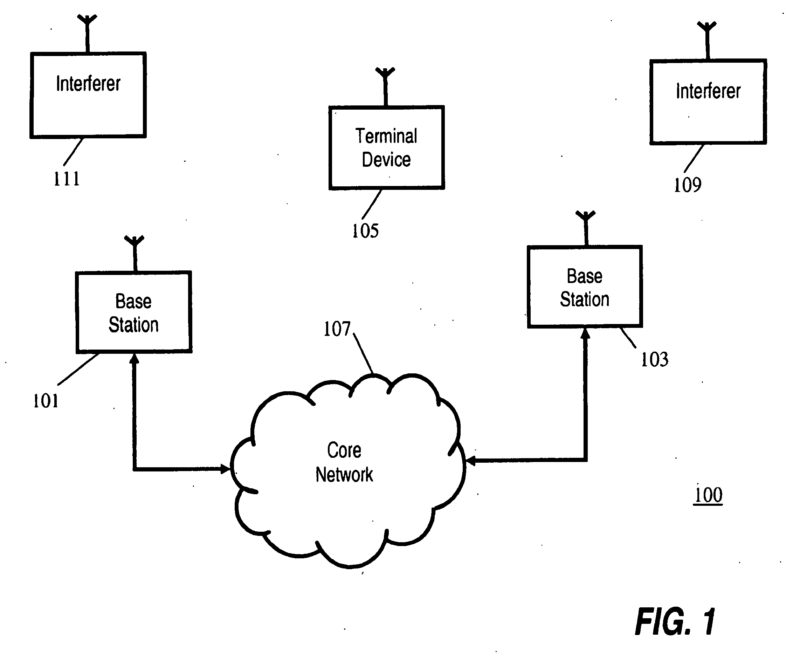

FIG. 1 illustrates an example of elements of a cellular communication system 100 with interference sources 109, 111.

FIG. 1 specifically illustrates two base stations 101, 103 which support at least one terminal device 105 in a narrowband wireless communication system, such as GSM. The terminal device may also be called a mobile station, a subscriber unit, user equipment, a wireless communication device, a mobile device, or any entity or device capable of communicating with a compatible base station over an air interface. For brevity and clarity, only two base stations 101, 103 and one terminal device 105 are illustrated in FIG. 1 but it will be appreciated that a practical GSM cellular communication system will typically include a large number of base stations and terminal devices. The base stations 101, 103 are coupled to a GSM network 107 which represents all other aspects of the fixed segment of the GSM communication system 100 including other base stations, Base Station Controllers, Master Switch Centers, etc, as will be well known to the person skilled in the art.

At certain times, such as when first being switched on, a terminal device of a GSM system must select a base station to be the serving base station. The base station selection (also referred to as cell selection) ideally results in selecting the base station that is best suited to serve the terminal device given the current propagation conditions. Typically, this will correspond to the base station that is closest to the terminal device (i.e., the base station serving the cell in which the terminal device is currently located). However, especially for terminal devices closer to the borders of a cell, a plurality of base stations may be suitable candidates for being selected.

As the terminal device has no prior knowledge of its current location or of which base stations are likely to be suitable serving base stations, the terminal device is required to scan the air interface channels of the GSM frequency band to detect a suitable serving base station.

The scanning by a conventional terminal device will sequentially try to decode the GSM channels in order of decreasing signal level. The terminal may then select the first base station that is successfully decoded. However, the scanning process may be affected by the presence of interference. For example, in the example of FIG. 1, the terminal device 105 may be affected by two interferers 109, 111 transmitting signals. In different scenarios the interference may have different characteristics. For example, the first interferer 109 may be a narrowband interferer which is received with a high power level in a single frequency channel of the GSM system. If this power level is higher than the received power level for the first base station that can be successfully decoded, the terminal device will first try to decode the narrowband interference.

As this will be unsuccessful, it will then proceed to attempt decoding of the signal in the channel in which the next highest power level is detected. Thus, a relatively small delay of the scanning process will result.

However, if the interference is wideband interference, the delay may become very substantial. For example, the interferer 111 may be a WCDMA transmitter transmitting a signal having a bandwidth of 5 MHz. Thus, the wideband interference will affect 5 MHz/ 200 kHz= 25 GSM channels. If this wideband interference is received at a signal level higher than the signal level of the first GSM base station that can be successfully decoded, a conventional terminal device will accordingly attempt to decode 25 interfered channels before attempting to decode the signal from the GSM base station. Accordingly, this wideband interference may introduce a very substantial delay and increased resource consumption to the scanning process.

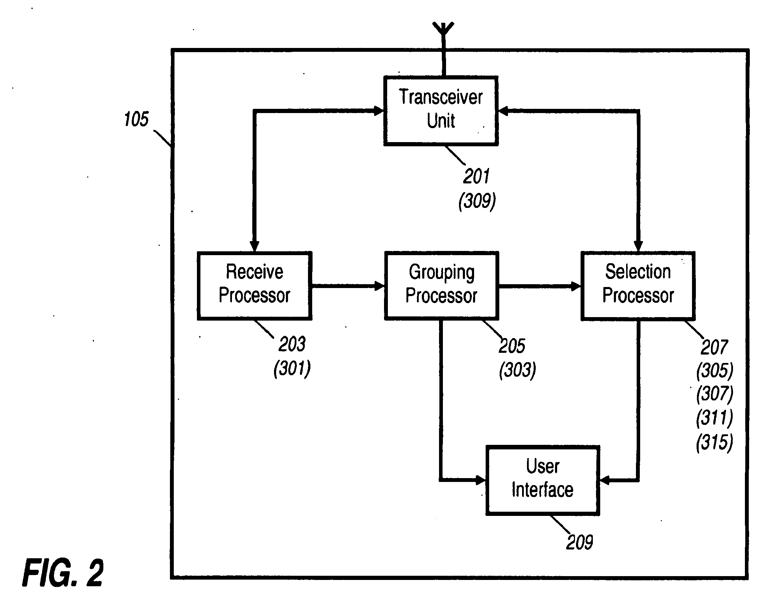

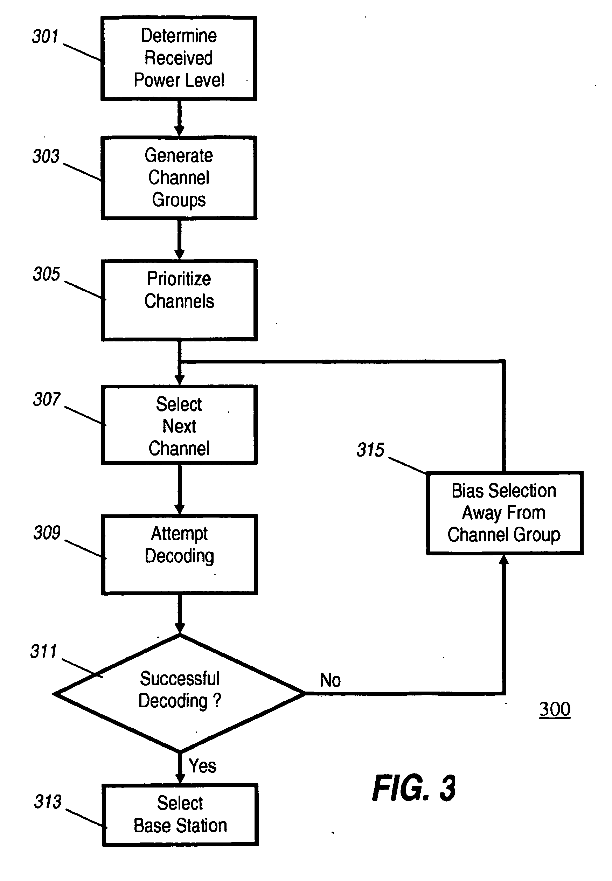

Examples of a cell selection process for the terminal device 105 will be described with reference to FIG. 2 which illustrates elements of the terminal device 105 and to FIG. 3 which illustrates a method of cell selection performed by the terminal device 105 of FIG. 2.

FIG. 2 is an illustration of a terminal device in accordance with some embodiments of the invention.

The terminal device 105 (of FIG. 1) comprises a transceiver unit 201 which is capable of transmitting and receiving over the air interface of the cellular communication system. Thus, the transceiver unit 201 performs functionality required or desired for the terminal device 105 to communicate with base stations 101, 103, for monitoring of broadcast channels from base stations, etc, as will be known to the skilled person.

The transceiver unit 201 is coupled to a receive processor 203 which is arranged to execute step 301 (see FIG. 3) which determines received signal levels for a number of air interface channels. In GSM, the available frequency band is divided into narrowband frequency channels of 200 kHz bandwidth. In the example, the receive processor 203 is arranged to control the receiver of the transceiver unit 201 to step through each of the available channels one by one to measure the received signal level for each channel. The received signal level is averaged over a suitable duration which provides the desired measurement accuracy. The measurement duration extends over at least one GSM frame, thereby providing an averaging of the receive levels of individual time slots for a traffic carrier. In the example, the received signal level is a received power level corresponding to a measure of the average received signal power in each channel.

The receive processor 203 receives the measured received signal level value from the transceiver unit 201 and then moves on to the next channel until all the channels in the frequency band used by the GSM system have been measured.

The receive processor 203 is coupled to a grouping processor 205 which is fed the received signal level for all the measured channels. The grouping processor 205 is arranged to execute step 303 (see FIG. 3) which consolidates at least some of the plurality of channels into groups of channels. The grouping is such that each group has consecutive channels, i.e. such that a group of channels will have a set of channels that are adjacent to each other. Thus, a group of channels has a sequence of channels that does not have any frequency gaps, holes, or missing channels in the sequence. Furthermore, the channels in a group are selected to meet a received signal level criterion. Thus, each group has a sequence of channels that all meet a requirement for the received signal level for the channels of the group.

As a specific example, the criterion may require that all channels of the group have a received signal level that is above a given threshold, such as -100 dBm, which may be preset or dynamically determined. For example, the grouping processor 205 may consolidate consecutive channels that have received signal levels above the threshold into the same group.

For example, the grouping processor 205 may detect that channel N-1 has a received signal level below a given threshold whereas the channel N has a received signal level above the threshold (where the index indicates that the channels are adjacent in the frequency domain i.e. that channel N-1 and N correspond to adjacent frequency intervals). It may then proceed to include channel N in a new channel group A. The grouping processor 205 then proceeds to evaluate channel N+1 and if this has a received signal level above the threshold it is included in the channel group A. The grouping processor 205 then moves on to evaluate if channel N+2 has a received signal level above the threshold and therefore should be included in the channel group A. The grouping processor 205 proceeds in this way until a channel, M, is detected for which the received signal level is below the threshold. In this case, the channel M is not included in any group and the first channel group A is complete and contains the consecutive channels N through to M-1. The grouping processor 205 then proceeds until the next channel is detected with a received signal level above the threshold resulting in a new channel group B being generated.

In this approach, consecutive frequency channels having high received signal levels are grouped together. Each of the groups may accordingly include one or more channels. A result of the grouping is that channels that have a high received signal level (possibly due to the presence of a high level of wideband interference) will be grouped together. For example, a potential significant wideband interference to a GSM system is in some scenarios generated by a CDMA or WCDMA cellular communication system operating in the same frequency band. Such systems spread signals across a bandwidth of 5 MHZ corresponding to 25 narrowband GSM channels.

By grouping channels that may have high received signal levels, the terminal device 105 may provide an improved cell selection in the presence of wideband interference. In particular, if decoding of a GSM base station signal has been unsuccessful for a number of channels of a group having high received signal levels, it is likely that these channels are experiencing high levels of wideband interference and therefore the remaining channels of the group may be discarded or otherwise deprioritized.

Thus, the grouping provides a means of detecting probable wideband interference in the GSM narrowband system. Wideband interference will typically extend over a significant number of consecutive channels whereas narrowband interference (such as noise from other base stations of the GSM communication system) and in particular interference from potential serving base stations in adjacent channels will only result in high received signal levels in lower numbers of consecutive channels. Therefore, the received signal level criterion may furthermore include a requirement that there must be more than a given number of consecutive channels that have received signal levels higher than the threshold. For example, following the specific described approach for generating channel groups, the grouping processor 205 may proceed to discard all channel groups that contain less than e.g. ten channels for further consideration.

It will be appreciated that the approach provides a particularly efficient means for detecting wideband interference by taking into account how such wideband interference will spread across different narrowband channels. As such, particularly efficient performance is typically found for relatively narrow channels of 500 kHz or less. In particular, the approach may provide attractive performance in a 200 kHz narrowband system, such as GSM.

In other embodiments, other received signal level criteria may be used. For example, in some embodiments the received signal level criterion may also include a requirement that the received signal level variation within a channel group must be below a threshold, which may be preset or dynamically determined. Indeed, in many scenarios, the signal level caused by a wideband interferer will be relatively constant for adjacent narrowband channels. In contrast, the received signal level variations for a scenario wherein different GSM base stations in adjacent channels are detected will tend to be substantially higher. Accordingly, the variation may be used to differentiate between scenarios wherein channels should be evaluated because they relate to signals from different GSM base stations and scenarios where channels may be bypassed because they are associated with high levels of wideband interference. As an example, only consecutive channels which have received signal levels both above a given threshold and that are within e.g. 5 dB of each other may be included in a channel groups. Also, it may be required that the number of consecutive channels having a power level variation below a predetermined threshold must be above a given value. For example, the grouping processor 205 may discard all channel groups that contain less than e.g. ten channels with sufficiently low power level variation.

The grouping processor 205 is coupled to a selection processor 207 which proceeds to select a suitable base station as the serving base-station for the terminal device 105. The grouping processor 205 evaluates the channels by first creating groups, then the selection process orders/prioritizes the channels and then iteratively evaluates each channel in this order until a suitable serving base station has been identified.

Thus, the selection processor 207 is fed the received signal level data and the grouping data from the grouping processor 205 and then proceeds to execute step 305 (see FIG. 3) which prioritizes the channels.

In the example, the initial prioritization performed in step 305 is a prioritization of the channels dependent on the received signal levels of the channels. Specifically, a sequential prioritized list of the channels in the order of the received signal levels is generated. Thus, the highest prioritized channel is the channel having the highest received signal level, the second highest prioritized channel is the channel having the second highest received signal level and so on.

It will be appreciated that in other embodiments, other approaches for prioritization may be used. For example, in some embodiments, the prioritization may be based on the groups of channels. For example, the prioritization may be in response to a number of channels in the groups of channels. E.g., as it is likely that channel groups with many channels represent channels that have high received signal levels due to the presence of a wideband interferer rather than the presence of possible serving base stations, the channels of such channel groups may be prioritized lower than channels which do not belong to a channel group or which belong to channel groups with fewer channels. As an example of such a prioritization, the selection processor 207 may for example prioritize all channels that do not belong to a channel group first, followed by channels that belong to a channel group prioritized in order of the number of channels in the channel group to which they belong.

In some embodiments, the prioritization may be in response to both the received signal levels and the channel groups. For example, channels that do not belong to a channel group may be prioritized in order of received signal level, followed by channels that belong to channel groups ordered in order of the number of channels in the channel groups with the channels within a channel group being prioritized in order of the received signal levels.

As another example, the channels may be divided into groups depending on the number of channels in the channel group to which they belong. For example, a first group may contain all the channels that do not belong to a channel group, a second group may contain all the channels belonging to a channel group with less than 10 channels, a third group may contain all the channels belonging to a channel group with 10 channels or more but with less than 20 channels, and a fourth group may contain all the channels belonging to a channel group with more than 20 channels. The prioritization may then prioritize the channels of the first group above channels of the second group, channels of the second group above channels of the third group, and channels of the third group higher than the fourth group. Within each group, the channels may be prioritized relative to each other in order of decreasing power level.

It will also be appreciated that in some embodiments, no initial ordering or prioritization may be performed by the selection processor 207 prior to the iterative channel evaluation. For example, in some embodiments, the channels may simply be evaluated in sequence from e.g. the lowest frequency to the highest frequency. Such an approach may be less complex and may result in a suitable base station being selected even if this is not necessarily the ideal base station. Following the initial selection, the terminal device 105 may then proceed to evaluate neighbour lists from the selected base station and, if appropriate, perform a cell-reselection to a better base station in accordance with standard GSM procedures.

The selection processor 207 subsequently begins the iterative evaluation of the prioritized channels.

Thus, step 305 (see FIG. 3) is followed by step 307 wherein the selection processor 207 selects the next channel to be evaluated. In the specific example, the selection processor 207 selects the next channel as the next highest prioritized channel (i.e., the next channel in the ordered list of channels. Thus, channels are selected in the order of the prioritization performed in step 305. The selection processor 207 accordingly in step 307 selects the highest prioritized channel that has not previously been evaluated.

Step 307 is followed by step 309 wherein the terminal device 105 attempts to decode a base station signal from the signal transmitted in the channel. In particular, the selection processor 207 controls the transceiver unit 201 to process the signal in the channel to derive received data symbols. This may include applying an error correcting decoding which can provide an error estimate. If the error estimate is above a given threshold, it is determined that the decoding is unsuccessful. However, if the error rate is below a threshold, the selection processor 207 proceeds to determine whether the received signal is a suitable signal from a base station and specifically proceeds to determine whether the received data is consistent with a GSM Broadcast Control Channel (BCCH). If so, the decoding is considered successful and otherwise it is considered unsuccessful. Thus, the decoding is successful if valid data from a BCCH can be received in the channel.

Step 309 is followed by step 311 wherein the selection processor 207 evaluates whether the decoding was designated successful or unsuccessful. If the decoding is successful the method continues in step 313 wherein the base station corresponding to the received base station signal in the channel is selected as the serving base station. Thus, the iterative evaluation and the cell selection process terminates with the identified base station being selected as the serving base station. Thus, in the approach, the search for a serving base station does not include a full (attempt at) decoding all channels in strict order of decreasing signal level but rather proceeds through a differently-prioritized list of channels until a suitable base station has been detected and identified. The selection processor 207 then proceeds to control the transceiver unit 201 to register with the selected base station.

If the decoding is not successful, step 311 is followed by step 315 wherein the selection processor 207 biases selection away from channels that belong to a channel group to which the current channel (for which decoding failed) also belongs. The method then returns to step 307 with the terminal device 105 proceeding to evaluate the next priority channel.

In the example, the biasing away from other channels in the current channel group (if any) is performed when a single decoding attempt fails for a channel in the channel group. However, in other embodiments, such biasing may be performed after a given number of decoding attempts have failed for the current channel group. For example, no biasing may be introduced for a channel group until e.g. two, three, or four failed decoding attempts have been executed for channels in the group. This may reduce the risk that a biasing is introduced away from channels that may contain suitable base stations (e.g. together with the wideband interference) but will also tend to increase the cell selection delay and power consumption.

In some embodiments, the biasing performed in step 315 may simply discard from future selection all channels of a channel group to which the current channel belongs. Thus, the selection processor 207 may first evaluate whether the current channel belongs to a channel group. If so, it can proceed to remove all channels belonging to this channel group from the ordered/prioritized list of channels. Thus, if the channel group corresponds to wideband interference, the decoding and evaluation of these channels is skipped thereby substantially reducing the delay and power consumption for the cell selection process.

In the specific example, the selection processor 207 is arranged to perform the biasing by de-prioritizing the other channels that belong to the current channel group. The de-prioritization is specifically such that the prioritization of all channels of the current group will be changed to be below the lowest prioritized channel from step 305. In the example, the selection processor 207 may simply move all channels of the current channel group to the end of the ordered list, i.e. to below the channel previously having the lowest priority. The relative priority between different channels of the current channel group may be maintained.

This approach may allow an improved trade-off between selecting an appropriate base station and the cell selection delay and power consumption. Specifically, in many scenarios it may allow a suitable base station to be detected without requiring all channels affected by strong wideband interference to first be attempted to be decoded while at the same time allowing that all channels will be evaluated until a suitable base station is detected. In particular, no channels are discarded but rather the order in which the channels are evaluated is dynamically adapted to reflect probable wideband interference conditions.

For example, in some scenarios, this approach may be used to ensure that the biasing away from the current channel group is such that other channels of the channel group are not attempted to be decoded until all channels that do not belong to a channel group and all other channel groups have been evaluated at least once. For example, in an embodiment where the biasing is performed at the first failed decoding attempt for a channel group, the second channel of a channel group is not evaluated until one channel from each channel group as well as all channels not belonging to a channel group have been evaluated.

Furthermore, the selection processor 207 may discard the current channel from any future consideration. If the selection processor 207 detects that all channels have been evaluated without a successful decoding of a base station, the method may terminate unsuccessfully resulting in the terminal device 105 not being able to register with a base station and thus not currently being able to be supported by the system (for example the terminal device 105 may be outside the coverage of a compatible GSM system).

Thus, the selection processor 207 sequentially evaluates each channel in an ordered approach until either a suitable base station is identified or all channels have been evaluated. The order in which the channels are evaluated (and/or which channels are in fact evaluated) is adapted to reflect a possible wideband interference scenario.

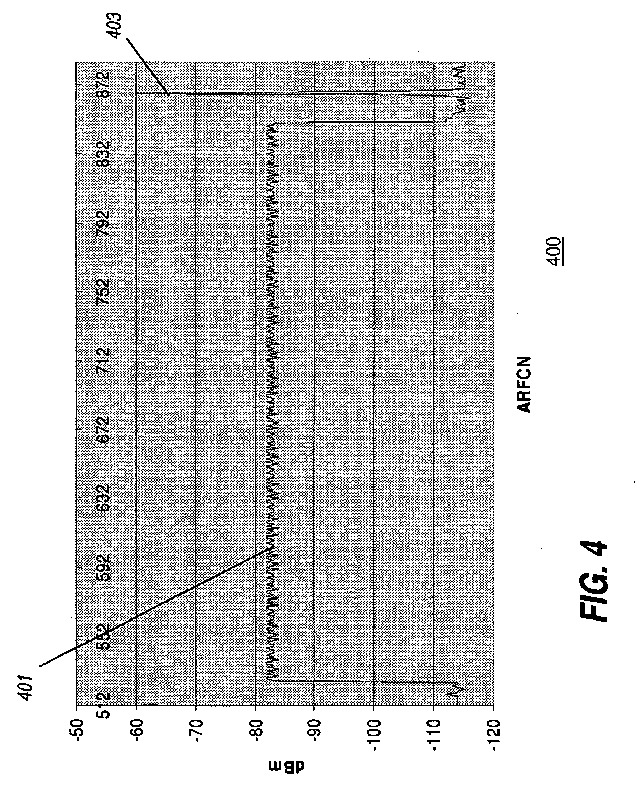

As an example, FIG. 4 illustrates a scenario 400 where high power signals 401 (e.g. >100dBm) extend across a large number of narrowband channels and another high power signal 403 from a suitable serving base station is received at a higher received signal level. In this example, the method of FIG. 3 will initially order the channels so that the channel of the base station signal 403 is prioritized highest followed by various channels affected by the wideband interfering signal 401. Thus, the selection processor 207 (see FIG. 2) will start by evaluating the base station signal 403 and successfully decode this, resulting in the corresponding base station being selected as a serving base station. In this case the base station may accordingly be selected in the same time as if the conventional approach described in TS 43.022 was used.

It should be noted that this result would also be achieved if the strong GSM base station signal 403 is located within the wideband interference signal 401 (provided the resulting signal to interference ratio is sufficient to allow decoding).

If the scenario included a narrowband interference source generating a received signal level in another channel which is higher than the base station signal 403, the terminal device 105 would attempt to decode this signal first. However, as the signal is not a base station signal, the decoding would be unsuccessful and the terminal device 105 would then move on to the next highest received signal level, namely that of the base station signal 401.

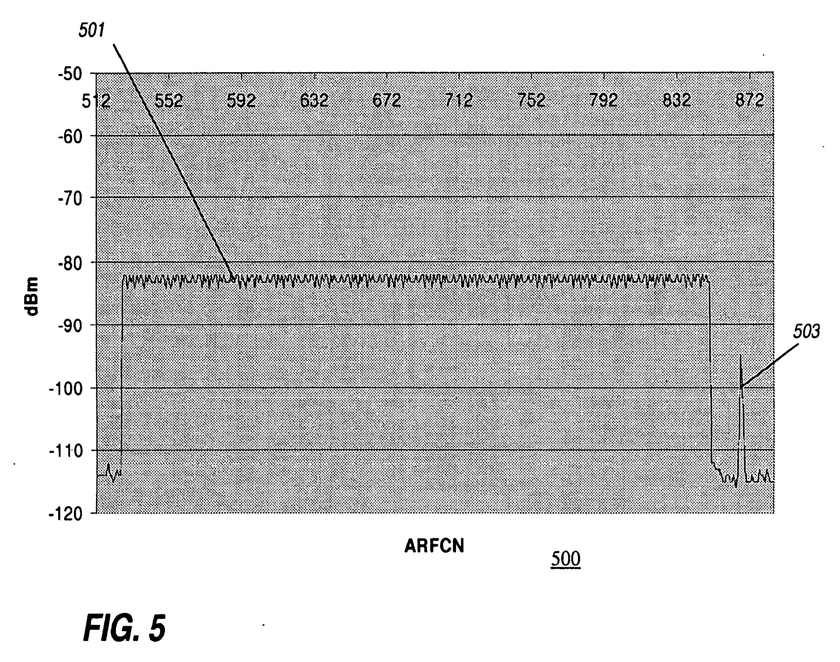

In the example scenario 500 illustrated in FIG. 5, the terminal device 105 also detects strong signals 501 which extend across a large number of channels and another strong signal 503 from a suitable serving base station. However, in this example the received signal level from the base station signal 503 is lower than for the wideband interfering signal 501.

In this case, the selection processor 207 will prioritize all the channels of the wideband interfering signal 501 above the channel of the base station signal 503 due to the prioritization being based only on received signal level and without knowledge that the signals are part of a wideband interference signal 501. In addition, the grouping processor will consolidate all the channels of the signal 501 together in a single channel group as they all have signal levels above a threshold and are consecutive.

Thus, the selection processor 207 will first attempt to decode the signal from one of the channels of the wideband interfering signal 501 believing that it may be a valid GSM signal. However, as the signal is not from a GSM base station, this decoding will fail. The selection processor 207 then detects that the channel is part of a channel group and it proceeds to de-prioritize all the channels of this channel group. Accordingly the next highest prioritized channel will become that of the base station signal 503 and the selection processor 207 proceeds to successfully decode this and consequently to select the corresponding base station as the serving base station. Thus, an appropriate base station is selected in only two iterations which is in stark contrast to the approach of TS 43.022 which would result in all channels of the wideband interfering signal 501 being evaluated before the channel of the base station signal 503.

For example, a typical time for trying to decode a base station signal without success may e.g. be around 12 GSM frames (~56 ms).

If the wideband interference is from a Wideband Code Division Multiple Access channel with a bandwidth of 5MHz, this will affect 25 GSM channels (5 MHz/200KHz). Accordingly, the time saving will be around (25-1) *56ms = 1.34sec.

Furthermore, the approach may be easy to implement and e.g. does not require any network changes.

It should be noted that if the initially-selected base station (transmitting base station signal 503) is not the most appropriate base station, i.e. that a more appropriate base station is broadcasting in a channel that is part of the channel grouping with wideband signal 501, the terminal device 105 may proceed to evaluate neighbour lists from the selected base station and, if appropriate, perform a cell reselection to a better base station in accordance with standard GSM procedures.

In the described embodiments, the terminal device 105 takes into consideration the probability that the terminal device 105 may experience substantial wideband interference. In some embodiments, the terminal device 105 may further be arranged to generate a user notification if it is detected that it is sufficiently likely that the terminal device 105 is experiencing a high degree of wideband interference. This user notification can specifically include a suggestion for the user to take remedial action, for example by moving to a different location.

It will be appreciated that in different embodiments, different types of user notification may be used. For example, the user notification may be provided as a text based message on a display of the terminal device 105 or may e.g. be provided as synthesized speech.

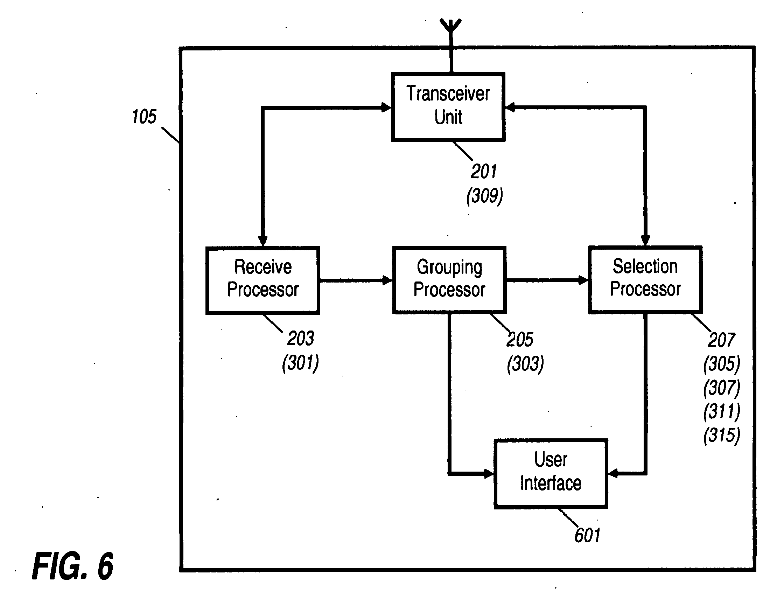

FIG. 6 illustrates an example of a terminal device in accordance with some embodiments of the invention.

Specifically, FIG. 6 corresponds to the terminal device 105 of FIG. 1 and 3 but with the further addition of a user interface 601 which is coupled to the grouping processor 205 and the selection processor 207. The user interface 601 is arranged to evaluate data from the grouping processor 205 and/or the selection processor 207 and to generate and present the user notification if this data is indicative of sufficient wideband interference being detected.

For example, if the evaluation of channels performed by the selection processor 207 results in a number of failed decoding attempts exceeding a given threshold, this may be determined to be indicative of a wideband interference scenario and accordingly a user notification can be generated. The failed decoding attempts may specifically be decoding attempts for one channel group or may for example be the total number of failed decoding attempts.

As a simple example, the terminal device 105 may simply be arranged to generate a user notification if the selection processor 207 decides to skip (or de-prioritize) a channel group.

As another example, the user notification may alternatively or additionally be dependent on the channel grouping. Specifically, if a large number of channels belong to channel groups, this may be an indication that many narrowband channels are experiencing wideband interference. For example, if more than, say, 50% of the channels belong to one or more channel groups it is likely that not only is the general interference level high but there is also likely to be wideband interference.

As another example, if the number of channels in one of the channel groups exceeds a given threshold, this is likely to be indicative of strong wideband interference. For example, if a channel group contains more than twenty channels this reflects that more than twenty consecutive channels have a received signal level higher than what is expected for a (weak) base station signal. This is more likely to reflect strong wideband interference and accordingly a user notification may be generated and presented to a user. The criterion may for example also include a requirement that the twenty channels have a power level variation which is below a given value in order to ensure that strong GSM signals within the wideband interference are not ignored.

The generation of a user notification informing of probable wideband interference may allow the user to take remedial action. For example, in many scenarios, wideband interference is created by local interference sources, such as e.g. a nearby computer. In such examples, the user may physically move the terminal device 105 to a different location thereby reducing the wideband interference. For example, in response to being provided with the user notification, the user may move further away from the computer thereby reducing wideband interference.

The description focuses on embodiments of the invention applicable to a cellular communication system and in particular to an application in a Global System for Mobile communication (GSM) system. However, it will be appreciated that the invention is not limited to this application but may be applied to many other wireless communication systems and in particular to narrowband wireless communication systems.

It will be appreciated that the above description for clarity has described embodiments of the invention with reference to different functional units and processors. However, it will be apparent that any suitable distribution of functionality between different functional units or processors may be used without detracting from the invention. For example, functionality illustrated to be performed by separate processors or controllers may be performed by the same processor or controllers. Hence, references to specific functional units are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements or method steps may be implemented by e.g. a single unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. Furthermore, the order of features in the claims does not imply any specific order in which the features must be worked and in particular the order of individual steps in a method claim does not imply that the steps must be performed in this order. Rather, the steps may be performed in any suitable order.

## Claims

1. A method of base station selection for a terminal device (105) of a wireless communication system, the method comprising:
determining (301) a received signal level for each of a plurality of air interface channels;
the method being **characterized by** further comprising:
consolidating (303) at least some of the plurality of air interface channels into at least a first channel group, each channel group comprising a set of consecutive channels of the plurality of air interface channels meeting a received signal level criterion including a first air interface channel;
selecting (307) the first air interface channel of the plurality of air interface channels;
attempting (309) to decode a first base station signal in the first air interface channel;
selecting (313) a first base station transmitting the first base station signal as a serving base station if decoding of the first base station signal is successful; and
biasing (315) selection away from all air interface channels belonging to the first channel group if a number of failed decoding attempts for air interface channels of the first channel group exceed a failed attempt threshold.

2. The method of claim 1 further comprising iterating:
selecting (307) a next air interface channel of the plurality of air interface channels;
attempting (309) to decode a next base station signal in the selected air interface channel;
selecting (313) a next base station transmitting the next base station signal as the serving base station if decoding of the next base station signal is successful; and
biasing (315) selection away from all air interface channels belonging to an associated channel group comprising the next air interface channel if a number of failed decoding attempts for air interface channels of the associated channel group exceed the failed attempt threshold.

3. The method of claim 2 further comprising
prioritizing (305) the plurality of air interface channels;
and wherein
selecting (307) the next air interface channel comprises selecting a next highest prioritized air interface channel; and
the biasing (315) comprises de-prioritizing all air interface channels of the associated channel group.

4. The method of claim 3 wherein the de-prioritizing results in a prioritization of all interface channels of the associated channel group being below a lowest prioritization for air interface channels not belonging to the associated channel group.

5. The method of claim 3 wherein the prioritizing (305) comprises ordering the plurality of air interface channels based on the received signal levels.

6. The method of claim 5 wherein the prioritizing (305) comprises generating a sequential prioritized list of the plurality of air interface channels in order of decreasing received signal levels.

7. The method of claim 3 wherein the prioritizing (305) comprises prioritizing the plurality of air interface channels based on a number of channels in channel groups.

8. The method of claim 1 wherein the biasing (315) comprises preventing selection of any air interface channel of the first channel group as the selected air interface channel in a subsequent iteration until after selection as the selected air interface channel of at least one air interface channel of each channel group and of all air interface channels not belonging to a channel group.

9. The method of claim 1 wherein the received signal level criterion comprises a requirement that a received signal level for all air interface channels of a channel group is above a threshold.

10. The method of claim 1 wherein the received signal level criterion comprises a requirement that a received signal level for air interface channels of a channel group is above a first threshold for more than a given number of consecutive air interface channels.

11. The method of claim 1 wherein the received signal level criterion comprises a requirement that a variation of received signal levels for air interface channels of a channel group is below a threshold.

12. The method of claim 1 wherein the failed attempt threshold is zero.

13. The method of claim 1 further comprising: generating a user notification in response to a threshold number of failed decoding attempts.

14. The method of claim 13 wherein the failed decoding attempts are decoding attempts within one channel group.

15. The method of claim 1 further comprising generating a user notification in response to a number of air interface channels within a channel group exceeding a threshold.

16. The method of claim 1 further comprising: generating a user notification in response to a total number of air interface channels included in channel groups exceeding a threshold.

17. The method of claim 1 wherein each air interface channel of the plurality of air interface channels has a bandwidth of not more than 500 kHz.

18. The method of claim 1 wherein the wireless communication system is a Global System for Mobile communication, GSM, cellular communication system.

19. A terminal device (105) for a wireless communication system, the terminal device comprising:
a receive processor (203) for determining a received signal level for each of a plurality of air interface channels;
the terminal device being **characterized by** further comprising:
a grouping processor (205) coupled to the receive processor for consolidating at least some of the plurality of air interface channels into channel groups, each channel group comprising a set of consecutive channels of the plurality of air interface channels meeting a received signal level criterion; and
a selection processor (207) coupled to the grouping processor and arranged to select a serving base station by iterating the steps of:
selecting (307) a next air interface channel of the plurality of air interface channels;
attempting (309) to decode a base station signal transmitted from a base station in the next air interface channel;
terminating (311) the iteration and selecting the base station as the serving base station if decoding of the base station signal is successful; and
biasing (315) selection away from all air interface channels belonging to a channel group including the next air interface channel if a number of failed decoding attempts for air interface channels of the channel group exceed a failed attempt threshold.

20. The terminal device of claim 19 wherein the selection processor (207) is arranged to prioritize the plurality of air interface channels prior to iteration and to select the next air interface channel as a next highest prioritized air interface channel.

## Patentansprüche

1. Verfahren zur Basisstationsauswahl für ein Endgerät (105) eines Drahtloskommunikationssystems, wobei das Verfahren umfasst:
Bestimmen (301) eines Pegels eines empfangenen Signals für jeden aus einer Mehrzahl von Sendeschnittstellenkanälen;
wobei das Verfahren **dadurch gekennzeichnet ist, dass** es weiter umfasst:
Vereinigen (303) mindestens einiger aus der Mehrzahl von Sendeschnittstellenkanälen zu mindestens einer ersten Kanalgruppe, wobei jede Kanalgruppe einen Satz aufeinanderfolgender Kanäle aus der Mehrzahl von Sendeschnittstellenkanälen umfasst, welche einem Empfangssignalpegelkriterium genügen, einschließlich eines ersten Sendeschnittstellenkanals;
Auswählen (307) des ersten Sendeschnittstellenkanals aus der Mehrzahl von Sendeschnittstellenkanälen;
Versuchen (309), ein erstes Basisstationssignal in dem ersten Sendeschnittstellenkanal zu entschlüsseln;
Auswählen (313) einer ersten Basisstation, die das erste Basisstationssignal aussendet, als eine dienende Basisstation, falls das Entschlüsseln des ersten Basisstationssignals erfolgreich ist; und
Beeinflussen (315) der Auswahl hinweg von allen Sendeschnittstellenkanälen, die der ersten Kanalgruppe angehören, wenn eine Anzahl fehlgeschlagener Entschlüsselungsversuche für Sendeschnittstellenkanäle der ersten Kanalgruppe einen Grenzwert für fehlgeschlagene Versuche übersteigt.

2. Verfahren nach Anspruch 1, das weiter ein Iterieren von Folgendem umfasst:
Auswählen (307) eines nächsten Sendeschnittstellenkanals aus der Mehrzahl von Sendeschnittstellenkanälen;
Versuchen (309), ein nächstes Basisstationssignal in dem ausgewählten Sendeschnittstellenkanal zu entschlüsseln;
Auswählen (313) einer nächsten Basisstation, die das nächste Basisstationssignal aussendet, als die dienende Basisstation, wenn das Entschlüsseln des nächsten Basisstationssignals erfolgreich ist; und
Beeinflussen (315) der Auswahl hinweg von allen Sendeschnittstellenkanälen, die einer zugehörigen Kanalgruppe angehören, welche den nächsten Sendeschnittstellenkanal umfasst, wenn eine Anzahl fehlgeschlagener Entschlüsselungsversuche für Sendeschnittstellenkanäle der zugehörigen Kanalgruppe den Grenzwert für fehlgeschlagene Versuche übersteigt.

3. Verfahren nach Anspruch 2, weiter umfassend
Priorisieren (305) der Mehrzahl von Sendeschnittstellenkanälen;
und wobei
das Auswählen (307) des nächsten Sendeschnittstellenkanals ein Auswählen eines nächsthöher priorisierten Sendeschnittstellenkanals umfasst; und
das Beeinflussen (315) ein Entpriorisieren aller Sendeschnittstellenkanäle der zugehörigen Kanalgruppe umfasst.

4. Verfahren nach Anspruch 3, wobei das Entpriorisieren eine Priorisierung aller Schnittstellenkanäle der zugehörigen Kanalgruppe ergibt, die unterhalb einer niedrigsten Priorisierung für Sendeschnittstellenkanäle liegen, die nicht der zugehörigen Kanalgruppe angehören.

5. Verfahren nach Anspruch 3, wobei das Priorisieren (305) ein Ordnen der Mehrzahl von Sendeschnittstellenkanälen auf der Grundlage der Empfangssignalpegel umfasst.

6. Verfahren nach Anspruch 5, wobei das Priorisieren (305) ein Erzeugen einer sequenziellen priorisierten Liste der Mehrzahl von Sendeschnittstellenkanälen in Reihenfolge abnehmender Empfangssignalpegel umfasst.

7. Verfahren nach Anspruch 3, wobei das Priorisieren (305) ein Priorisieren der Mehrzahl von Sendeschnittstellenkanälen auf der Grundlage einer Anzahl von Kanälen in Kanalgruppen umfasst.

8. Verfahren nach Anspruch 1, wobei das Beeinflussen (315) umfasst:
ein Verhindern der Auswahl jedes Sendeschnittstellenkanals der ersten Kanalgruppe als ausgewählten Sendeschnittstellenkanal in einer nachfolgenden Iteration bis nach Auswahl als ausgewählten Sendeschnittstellenkanal mindestens eines Sendeschnittstellenkanals einer jeden Kanalgruppe und aller Sendeschnittstellenkanäle, die nicht einer Kanalgruppe angehören.

9. Verfahren nach Anspruch 1, wobei das Kriterium des Empfangssignalpegels eine Bedingung enthält, dass ein Empfangssignalpegel für alle Sendeschnittstellenkanäle einer Kanalgruppe oberhalb eines Grenzwertes liegt.

10. Verfahren nach Anspruch 1, wobei das Kriterium des Empfangssignalpegels eine Bedingung enthält, dass ein Empfangssignalpegel für Sendeschnittstellenkanäle einer Kanalgruppe oberhalb eines ersten Grenzwertes für mehr als eine gegebene Anzahl aufeinanderfolgender Sendeschnittstellenkanäle liegt.

11. Verfahren nach Anspruch 1, wobei das Kriterium des Empfangssignalpegels eine Bedingung enthält, dass eine Änderung von Empfangssignalpegeln für Sendeschnittstellenkanäle einer Kanalgruppe unterhalb eines Grenzwertes liegt.

12. Verfahren nach Anspruch 1, wobei der Grenzwert für fehlgeschlagene Versuche null ist.

13. Verfahren nach Anspruch 1 , weiter umfassend: Erzeugen einer Nutzerbenachrichtigung als Reaktion auf eine Grenzwertanzahl fehlgeschlagener Entschlüsselungsversuche.

14. Verfahren nach Anspruch 13, wobei die fehlgeschlagenen Entschlüsselungsversuche Entschlüsselungsversuche innerhalb einer Kanalgruppe sind.

15. Verfahren nach Anspruch 1, weiter umfassend: Erzeugen einer Nutzerbenachrichtigung als Reaktion darauf, dass eine Anzahl von Sendeschnittstellenkanälen innerhalb einer Kanalgruppe einen Grenzwert übersteigt.

16. Verfahren nach Anspruch 1, weiter umfassend: Erzeugen einer Nutzerbenachrichtigung als Reaktion darauf, dass eine Gesamtzahl von Sendeschnittstellenkanälen, die in Kanalgruppen enthalten sind, einen Grenzwert übersteigt.

17. Verfahren nach Anspruch 1, wobei jeder Sendeschnittstellenkanal der Mehrzahl von Sendeschnittstellenkanälen eine Bandbreite von nicht mehr als 500 kHz hat.

18. Verfahren nach Anspruch 1, wobei das Drahtloskommunikationssystem ein zellulares Global-System-for-Mobile-communication-, GSM-Kommunikationssystem ist.

19. Endgerät (105) für ein Drahtloskommunikationssystem, wobei das Endgerät umfasst:
einen Empfangsprozessor (203) zum Bestimmen eines Empfangssignalpegels für jeden aus einer Mehrzahl von Sendeschnittstellenkanälen;
wobei das Endgerät **dadurch gekennzeichnet ist**, das es weiter umfasst:
einen Gruppierungsprozessor (205), der mit dem Empfangsprozessor gekoppelt ist, zum Vereinigen mindestens einiger aus der Mehrzahl von Sendeschnittstellenkanälen zu Kanalgruppen, wobei jede Kanalgruppe einen Satz aufeinanderfolgender Kanäle aus der Mehrzahl von Sendeschnittstellenkanälen umfasst, welche einem Empfangssignalpegelkriterium genügen; und
einen Auswahlprozessor (207), der mit dem Gruppierungsprozessor gekoppelt ist und ausgelegt ist, eine dienende Basisstation durch Iterieren der folgenden Schritte auszuwählen:
Auswählen (307) eines nächsten Sendeschnittstellenkanals aus der Mehrzahl von Sendeschnittstellenkanälen;
Versuchen (309), ein Basisstationssignal zu entschlüsseln, welches von einer Basisstation in dem nächsten Sendeschnittstellenkanal ausgesandt wurde;
Beenden (311) der Iteration und Auswählen der Basisstation als dienende Basisstation, wenn das Entschlüsseln des Basisstationssignals erfolgreich ist; und
Beeinflussen (315) der Auswahl hinweg von allen Sendeschnittstellenkanälen, die einer Kanalgruppe angehören, die den nächsten Sendeschnittstellenkanal enthält, wenn eine Anzahl fehlgeschlagener Entschlüsselungsversuche für Sendeschnittstellenkanäle der Kanalgruppe einen Grenzwert für fehlgeschlagene Versuche übersteigt.

20. Endgerät nach Anspruch 19, wobei der Auswahlprozessor (207) ausgelegt ist, die Mehrzahl von Sendeschnittstellenkanälen vor der Iteration zu priorisieren und den nächsten Sendeschnittstellenkanal als einen nächsthöher priorisierten Sendeschnittstellenkanal auszuwählen.

## Revendications

1. Procédé de sélection de station de base pour un dispositif terminal (105) d' un système de communication sans fil, le procédé comprenant :
la détermination (301) d' un niveau de signal reçu pour chacun d'une pluralité de canaux d'interface radio ;
le procédé étant **caractérisé par** le fait de comprendre en outre :
le regroupement (303) d'au moins certains de la pluralité de canaux d'interface radio en au moins un premier groupe de canaux, chaque groupe de canaux comprenant un ensemble de canaux consécutifs de la pluralité de canaux d'interface radio répondant à un critère de niveau de signal reçu incluant un premier canal d'interface radio ;
la sélection (307) du premier canal d'interface radio de la pluralité de canaux d'interface radio ;
la tentative (309) de décodage d'un premier signal de station de base dans le premier canal d'interface radio ;
la sélection (313) d'une première station de base émettant le premier signal de station de base comme une station de base de desserte si le décodage du premier signal de station de base est réussi ; et
la sollicitation (315) de la sélection hors de tous les canaux d'interface radio appartenant au premier groupe de canaux si un nombre de tentatives de décodage échouées pour des canaux d'interface radio du premier groupe de canaux dépasse un seuil de tentatives échouées.

2. Procédé selon la revendication 1, comprenant en outre l'itération de :
la sélection (307) d' un prochain canal d'interface radio de la pluralité de canaux d'interface radio ;
la tentative (309) de décodage d' un prochain signal de station de base dans le canal d'interface radio sélectionné ;
la sélection (313) d' une prochaine station de base émettant le prochain signal de station de base comme la station de base de desserte si le décodage du prochain signal de station de base est réussi ; et
la sollicitation (315) de la sélection hors de tous les canaux d'interface radio appartenant à un groupe de canaux associé comprenant le prochain canal d'interface radio si un nombre de tentatives de décodage échouées pour des canaux d'interface radio du groupe de canaux associé dépasse le seuil de tentatives échouées.

3. Procédé selon la revendication 2, comprenant en outre
la priorisation (305) de la pluralité de canaux d'interface radio ;
et dans lequel
la sélection (307) du prochain canal d'interface radio comprend la sélection d' un prochain canal d'interface radio dont la priorité est la plus élevée ; et
la sollicitation (315) comprend la dépriorisation de tous les canaux d'interface radio du groupe de canaux associé.

4. Procédé selon la revendication 3, dans lequel la dépriorisation entraîne une priorisation de tous les canaux d'interface radio du groupe de canaux associé qui est au-dessous d'une priorisation la plus basse pour des canaux d'interface radio n'appartenant pas au groupe de cana ux associé.

5. Procédé selon la revendication 3, dans lequel la priorisation (305) comprend l'ordonnance de la pluralité de canaux d'interface radio sur la base des niveaux de signal reçu .

6. Procédé selon la revendication 5, dans lequel la priorisation (305) comprend la génération d' une liste priorisée séquentielle de la pluralité de canaux d'interface radio par ordre de niveaux de signal reçu décroissants.

7. Procédé selon la revendication 3, dans lequel la priorisation (305) comprend la priorisation de la pluralité de canaux d'interface radio sur la base d'un nombre de canaux dans des groupes de canaux.

8. Procédé selon la revendication 1, dans lequel la sollicitation (315) comprend le fait d'empêcher la sélection de tout canal d'interface radio du premier groupe de canaux comme le canal d'interface radio sélectionné lors d'une itération subséquente jusqu'après la sélection comme le canal d'interface radio sélectionné d'au moins un canal d'interface radio de chaque groupe de canaux et de tous les canaux d'interface radio n'appartenant pas à un groupe de canaux.

9. Procédé selon la revendication 1, dans lequel le critère de niveau de signal reçu comprend une exigence selon laquelle un niveau de signal reçu pour tous les canaux d'interface radio d'un groupe de canaux est au-dessus d'un seuil.

10. Procédé selon la revendication 1, dans lequel le critère de niveau de signal reçu comprend une exigence selon laquelle un niveau de signal reçu pour des canaux d'interface radio d' un groupe de canaux est au-dessus d' un premier seuil pour un nombre supérieur à un nombre donné de canaux d'interface radio consécutifs.

11. Procédé selon la revendication 1, dans lequel le critère de niveau de signal reçu comprend une exigence selon laquelle une variation de niveaux de signal reçu pour des canaux d'interface radio d' un groupe de canaux est au-dessous d' un seuil.

12. Procédé selon la revendication 1, dans lequel le seuil de tentatives échouées est zéro.

13. Procédé selon la revendication 1, comprenant en outre : la génération d' une notification d'utilisateur en réponse à un nombre seuil de tentatives de décodage échouées.

14. Procédé selon la revendication 13, dans lequel les tentatives de décodage échouées sont des tentatives de décodage à l'intérieur d' un groupe de canaux.

15. Procédé selon la revendication 1, comprenant en outre : la génération d' une notification d' utilisateur en réponse à un nombre de canaux d'interface radio à l'intérieur d' un groupe de canaux dépassant un seuil.

16. Procédé selon la revendication 1, comprenant en outre : la génération d' une notification d' utilisateur en réponse à un nombre total de canaux d'interface radio inclus dans des groupes de canaux dépassant un seuil.

17. Procédé selon la revendication 1, dans lequel chaque canal d'interface radio de la pluralité de canaux d'interface radio a une largeur de bande non supérieure à 500 kHz.

18. Procédé selon la revendication 1, dans lequel le système de communication sans fil est un système de communication cellulaire du système global de communication mobile; GSM.

19. Dispositif terminal (105) pour un système de communication sans fil, le dispositif terminal comprenant :
un processeur de réception (203) pour déterminer un niveau de signal reçu pour chacun d' une pluralité de canaux d'interface radio ;
le dispositif terminal étant **caractérisé par** le fait de comprendre en outre :
un processeur de groupement (205) couplé au processeur de réception pour regrouper au moins certains de la pluralité de canaux d'interface radio en groupes de canaux, chaque groupe de canaux comprenant un ensemble de canaux consécutifs de la pluralité de canaux d'interface radio répondant à un critère de niveau de signal reçu ; et
un processeur de sélection (207) couplé au processeur de groupement et agencé pour sélectionner une station de base de desserte en itérant les étapes consistant à :
sélectionner (307) un prochain canal d'interface radio de la pluralité de canaux d'interface radio ;
tenter (309) de décoder un signal de station de base émis depuis une station de base dans le prochain canal d'interface radio ;
terminer (311) l'itération et sélectionner la station de base comme la station de base de desserte si le décodage du signal de station de base est réussi ; et
solliciter (315) la sélection hors de tous les canaux d'interface radio appartenant à un groupe de canaux incluant le prochain canal d'interface radio si un nombre de tentatives de décodage échouées pour des cana ux d'interface radio du groupe de canaux dépasse un seuil de tentatives échouées.

20. Dispositif terminal selon la revendication 19, dans lequel le processeur de sélection (207) est agencé pour prioriser la pluralité de canaux d' interface radio avant l'itération et pour sélectionner le prochain canal d'interface radio comme un prochain canal d'interface radio dont la priorité est la plus élevée.
